# EUROPEAN PATENT APPLICATION

(11) **EP 1 715 703 A1**
(43) Date of publication of application: **25.10.2006**
(21) Application number: 06007982.9
(22) Date of filing: 18.04.2006
(51) Int. Cl.: H04Q 7/32, G06F 17/30, H04M 1/725

(54) **Portable communication apparatus cross references to related applications**

(30) Priority: 19.04.2005 JP 2005121600
(71) Applicant: Sony Ericsson Mobile Communications Japan, Inc., Tokyo (JP)
(72) Inventor: Naruse, Takuya, Minato-ku, Tokyo (JP)
(74) Representative: Körber, Martin Hans

(57) **Abstract**

A portable communication apparatus (200) is provided, in which a plurality of event information items are acquired, each of which includes information acquired when a user executes a predetermined function of mobile phone and a date and time of this execution, and the plurality of event information items are stored in a memory (208) in the form of an event list. When the user operates an operational unit (206) and selects desired event information from the event list displayed on a display device (207), control means (210) control such that the selected event information is read from the memory (208) and sent to a server by communication means as information displayed with a predetermined display format. A server provides a simplified website including information sent from the portable communication apparatus. Accordingly, daily activities of the user are automatically recorded, and the user can easily build a simplified website (blog) based on the recorded contents of action.

## Description

### CROSS REFERENCES TO RELATED APPLICATIONS

The present invention contains subject matter related to Japanese Patent Application JP 2005-121600 filed in the Japanese Patent Office on April 19, 2005, the entire contents of which being incorporated herein by reference.

### BACKGROUND OF THE INVENTION

### Field of the Invention:

The present invention relates to a portable communication apparatus, particularly to a portable communication apparatus with which a simplified website is easily built by using a portable communication apparatus such as a mobile phone unit that has GPS (Global Positioning System) function, an electronic wallet function and the like.

### Description of the Related Art:

Lately, a communication tool called a blog (abbreviation of Weblog) is widely used on the Internet. The blog is a generic term used for a website of a journal or the like, and is not only a journal site where personal activities are written daily (record of activities of the author), but also a site where links to interesting news articles and to websites found on the Internet are provided and articles to which author's comments were added can be arranged in chronological order.

On the other hand, in order to manage actions of a day by using an apparatus, an action management apparatus, in which a GPS function is installed in a mobile phone unit or a PDA (Personal Digital Assistant), useful information is estimated or searched from position information, an action list is formed based on such information, and the action of a person is managed by this action list, is proposed (refer to, for example, Patent Document 1: Japanese Published Patent Application 2003-76818).

### SUMMARY OF THE INVENTION

For example, when a journal site is made open, typically, edit and upload are performed on a personal computer (hereinafter called "PC") or on a mobile phone unit. For example, update of a blog can be performed instantly by using the mobile phone unit even if a user is away from home. However, since it is inconvenient to update the blog each time when an event occurs, or even if it is intended to update the blog later on, events may not be updated for some reason and the blog may remain as it is. In addition, even if it is intended to update the blog every day, there is a case in which no contents to write are found. Further, in order to modify the blog format, work must be done on a web server on the upload side after the blog is formed, which is inconvenient.

In view of the above, the present invention provides a portable communication apparatus in which the daily action of a user is automatically recorded and the user can build a simplified website (blog) easily based on the contents of action recorded.

A portable communication apparatus according to an embodiment of the present invention includes: communication means for communicating through a wireless communication network with a server that provides a simplified website including information sent from a portable communication apparatus; information acquisition means for acquiring a plurality of event information items each of which includes information which is acquired when a predetermined function is executed and a date and time of this execution; a memory for storing the plurality of event information items in the form of an event list; a display device for displaying the event list; an operational unit for selecting desired event information from the event list displayed on the display device; and control means for controlling the communication means, the information acquisition means, the memory and the display device, wherein the control means control such that the desired event information selected by the operational unit is read from the memory and is sent to the server by the communication means as information to be displayed with a predetermined display format.

For example, a blog is applied as the simplified website described above.

According to the above-described configuration, a specific action performed by a user can be automatically recorded and stored as the event information, and the desired event information is selected from the stored event information, and the simplified web log can be formed easily.

According to an embodiment of the present invention, since the contents of user's action of a day are recorded automatically as the event information, there is effectiveness that the event and action of the day can be recalled without difficulty. Further, because the event information can be selected and edited easily on the portable communication apparatus side, there is such effectiveness that a blog and other simplified websites can be formed easily.

### BRIEF DESCRIPTION OF THE DRAWINGS

FIG. 1 is a diagram showing a block configuration, according to an embodiment of a portable communication apparatus of the present invention;
FIG. 2 is a table showing an event recording format according to an embodiment of the present invention;
FIG. 3 is a flow chart when uploading the event information according to an embodiment of the present invention;
FIG. 4 is a view showing a screen transition example 1 according to an embodiment of the present invention;
FIG. 5 is a view showing a screen transition example 2 according to an embodiment of the present invention;
FIG. 6 is a view showing a screen transition example 3 according to an embodiment of the present invention;
FIG. 7 is a view showing a screen transition example 4 according to an embodiment of the present invention;
FIG. 8 is a table for explaining comment automatic preparation according to an embodiment of the present invention;
FIG. 9 is a view showing a screen transition example 5 according to an embodiment of the present invention;
FIG. 10 is a flow chart of the preview editing according to an embodiment of the present invention;
FIG. 11 is a view showing a screen transition example 6 according to an embodiment of the present invention;
FIG. 12 is a view for explaining layout change according to an embodiment of the present invention;
FIG. 13 is a view showing a screen transition example 7 according to an embodiment of the present invention;
FIG. 14 is a view showing an image of the display of a blog page according to an embodiment of the present invention; and
FIG. 15 is a view showing the whole image of the screen transition according to an embodiment of the present invention.

### DESCRIPTION OF THE PREFERRED EMBODIMENTS

Hereinafter, preferred embodiments for carrying out the present invention are explained; however, the present invention is not limited to the following embodiments.

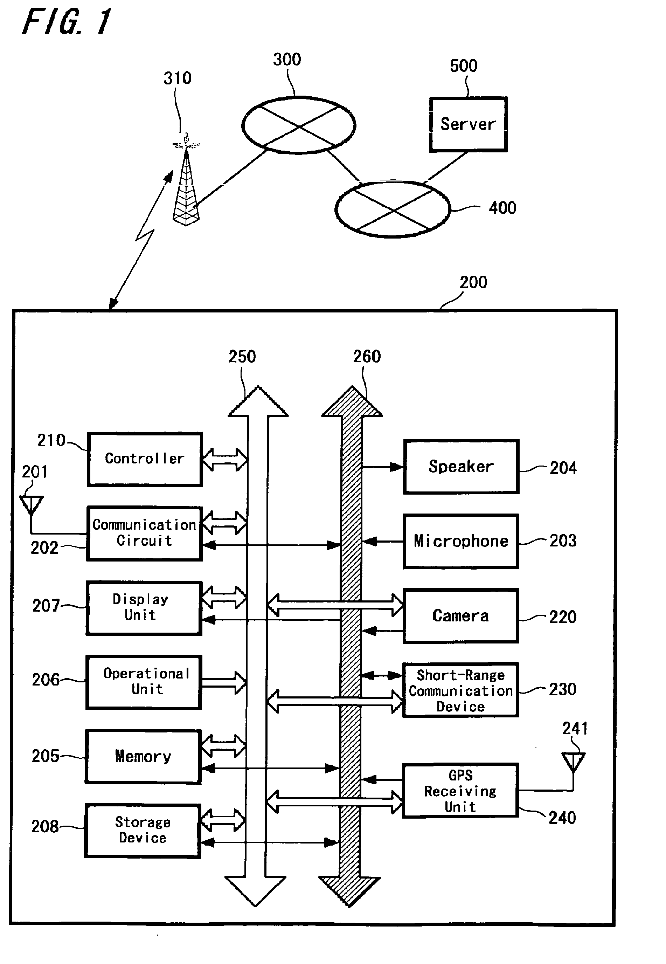

First, an embodiment of the present invention is explained with reference to FIG. 1.

FIG. 1 schematically shows an outline of a block configuration of a communication system and a portable communication apparatus connected to the communication system, to which the present invention is applied. In FIG. 1, a portable communication apparatus 200 is connected to a mobile phone network 300 though a base station 310, and further connected to a server 500 from the mobile phone network 300 through the Internet 400 that is a public communication line. The server 500 functions as a web server which provides various websites including a blog. As the portable communication apparatus 200, for example, a mobile phone unit can be used. In this embodiment, a blog is hereinafter called a "simplified website".

The portable communication apparatus 200 includes an antenna 201 with which a radio wave is transmitted to and received from the base station 310 of the mobile phone network 300. The antenna 201 is connected to a communication circuit 202, and the communication circuit 202 is controlled by a controller 210 to modulate a transmitting signal and demodulate a received signal. In the case in which the communication for telephone call is performed by the communication circuit 202, received voice data is converted from an electric signal to a voice to be output from a speaker 204, and voice data obtained by converting a voice picked up by a microphone 203 into an electric signal is supplied to the communication circuit 202 to be transmitted to the base station 310.

Further, the portable communication apparatus 200 includes an operational unit 206 formed of a jogdial, keypad and the like and a display unit 207 having an LCD (Liquid Crystal Display) or the like. The operational unit 206 is used to perform input operation of telephone numbers, mail messages and the like, setting operation of various modes, and so on. On the display unit 207, mail messages, the screen downloaded after accessed to a web server, and the like can be displayed.

Further, the portable communication apparatus 200 includes a memory 205 which functions as a temporary storage device necessary for various kinds of processing performed by the controller 210. The controller 210 is formed of a processor such as CPU (Central Processing Unit), and uses the memory 205 as a work area to control the whole apparatus in accordance with programs recorded in a ROM (Read Only Memory) not shown in the figure and further performs a predetermined event information recording operation and upload operation. A storage device (storage means) 208 is formed of a non-volatile memory such as a flash memory, and stores various kinds of information such as a telephone directory, schedule, mail message, image, music, application software, bookmark, webpage, electronic money information, electronic commuter pass, electronic ticket and an electronic stamp card and the like.

Furthermore, the portable communication apparatus 200 includes a camera 220 that converts a captured image into an electrical signal and a short-range communication device 230 that performs sending and receiving of electronic money information and electronic ticket information stored in the storage device 208. As the short-range communication device 230, for example, a non-contact IC card such as a Felica®, a Blutooth® that uses 2.4 GHz band, or the like may be used.

The non-contact IC card has an accounting data controller to which an antenna not shown in the figure is connected, and performs close-range wireless communication with a reader/writer by the distance of about several centimeters which is considerably near. The antenna used for performing communication with the reader/writer is incorporated in a casing of the portable communication apparatus 200, for example, and the bidirectional communication can be performed by bringing the surface of casing close to the reader/writer. Note that, the non-contact IC card may be detachable from the portable communication apparatus 200.

When the short-range communication is performed, the short-range communication device 230 reads necessary data for accounting and authentication from the storage device 208 to be sent to the reader/writer. For example, information on an admission ticket to enter a certain facility that a user purchased in advance (what is called an electronic ticket), information on charged electric money withdrawn when entering the facility or when purchasing goods and the like, are stored in the memory. In addition, part of the data necessary for the short-range communication device 230 may be stored in the memory inside the short-range communication device 230.

A GPS receiving unit 240 receives a radio wave sent from a GPS satellite through a GPS antenna 241 to know the position information on itself. Position information sent by position information adding service in the mobile phone system may also be received from the mobile phone network 310 to know the position thereof.

A control line 250 is a line along which a signal for controlling each device connected thereto is supplied. Predetermined devices within the portable communication apparatus 200 are connected to the controller 210 through the control line 250, and each processing is performed by the control of the controller 210.

A data line 260 is a line by which the data transfer is performed among the devices connected thereto.

The portable communication apparatus 200 can specify the present area of the terminal itself by position information from the base station connecting thereto or by position information obtained by the GPS antenna 241 and GPS receiving unit 240. Also, the train-station information, store information and the like may be obtained by using an electronic ticket, electronic train ticket, and the like, because there is the cases in which position information is included in such information.

Further, information on the electronic money and electronic ticket recorded in the storage device 208 can be sent and received by using the mobile phone network, in addition to sending and receiving through the short-range communication device 230.

Next, operation of the portable communication apparatus having the configuration described above is explained. The operation includes "operation when recording event information" and "operation when uploading the event information". Note that, event information is the information relating to action of a user, and at least includes action of the user and information on the date/time when the action was carried out.

First, the "operation when recording event information" is explained.

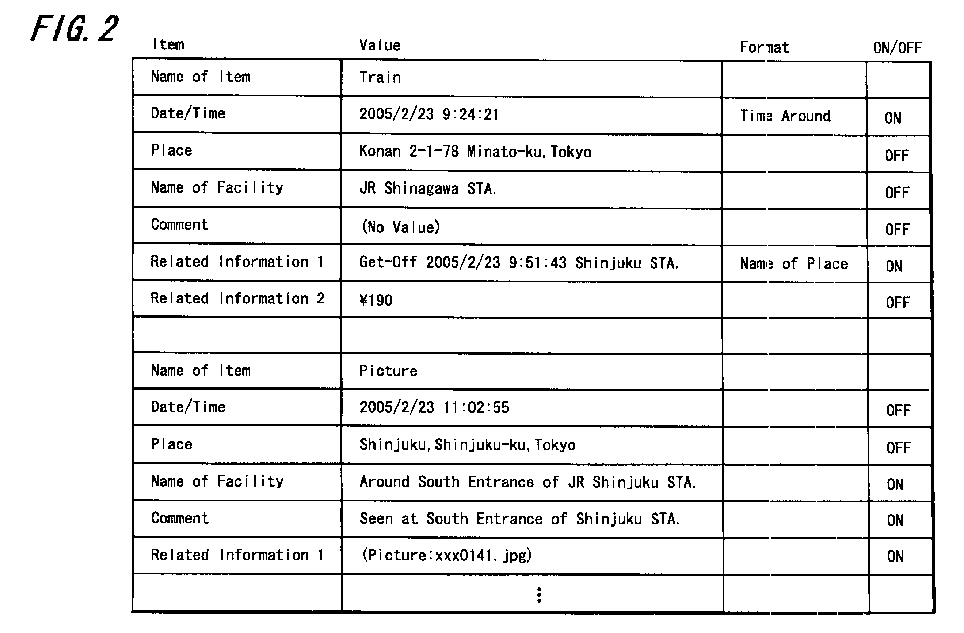

As for the event information, contents are stored in the storage device 208 when the electronic money, electronic commuter pass, electronic train ticket, electronic ticket and the like are used, when an image was captured by a camera, and when telephone call and transmitting and receiving mail are performed. In other cases than the above, a certain action of the user (deed, action and the like) may be recorded as a trigger. At this time, contents to be stored in the storage device 208 are recorded with a format as shown in FIG. 2.

An event recording format shown in FIG. 2, for example, includes: "Item" to explain the contents of the event, "Value" to show specific contents of each item, "Format" when automatically preparing a comment, "OFF/ON" to select an item used when automatically preparing a comment.

The "Item" described above includes: "Name of Item (event name)", "Date/Time", "Place", "Name of Facility", "Comment", "Related Information" and the like. Information on date/time is acquired from an internal timer or the like installed in the portable communication apparatus 200. Further, an image, sound and the like are also included in the column of related information, in addition to the text information.

Hereinafter, the operation of recording event information is explained by giving examples of specific action.

### A: Operation in the case in which electronic money is used

There are two kinds of cases in which electronic money is used, one of which is the online payment performed by using the mobile phone network, and other of which is the payment performed in actuality in a shop by using the short-range communication device.

### [The Case of Online Payment]

1. Authentication of the other party for settlement and encoding of information are performed in the controller 210, and the online payment is performed by sending and receiving the electronic money information within the storage device 208 through the mobile phone network.
2. Next, information on purchased merchandise, on the URL (Uniform Resource Locator) of website where goods were purchased and the like are received from the shop where the goods were purchased through the mobile phone network, and the information, time information and the like are recorded in the storage device 208 as the event information.
3. Then, an upload indicator which indicates the event information being displayed is displayed on the display unit 207.

### [The Case of Payment in Actual Shop]

1. Authentication of the other party for settlement and encoding of information are performed in the controller 210, and information on the electronic money within the storage device 208 is sent and received through the short-distance communication device 230.
2. Next, information on purchased merchandise, on the shop where goods were purchased and the like are received from the shop where the goods were purchased through the short-range communication device 230, and the information, time information, area information and the like are recorded in the storage device 208 as the event information.
3. Then, an upload indicator is displayed on the display unit 207.

### B: Operation in the case in which a ticket gate was passed through by using an electronic commuter pass, electronic train ticket and the like

1. Authentication of the ticket gate side and encoding of information are performed in the controller 210, and information on the electronic commuter pass and information on electronic train ticket within the storage device 208 is sent and received through the short-range communication device 230.
2. Next, the station information on getting on/off is received from the ticket gate side through the short-range communication device 230, and this information, time-information and the like are recorded in the storage device 208 as the event information (refer to FIG. 2).
3. Then, an upload indicator is displayed on the display unit 207.

In FIG. 2, in the "ON/OFF" to select an item used when automatically preparing a comment, items to be "ON" are set in advance regarding the case in which the electric commuter pass or electronic train ticket is used, and in the example shown in the figure, the items of date/time and related information 1 are being set "ON". The settings of "ON/OFF" may also be performed later on.

### C: Operation when using an electronic ticket

1. Authentication of the electronic ticket authentication gate side and the encoding of information are performed in the controller 210, and information on the electronic ticket within the storage device 208 is sent and received through the short-range communication device 230.
2. Next, information relating to the electronic ticket used is read from the electronic ticket stored in the authentication gate or storage device 208 through the short-range communication device 230, and this information, time-information and the like are recorded in the storage device 208 as the event information.
3. Then, an upload indicator is displayed on the display unit 207.

### D: Operation when capturing an image by a camera.

1. When a signal of a key corresponding to a shutter on the casing of the portable communication device 200 being pushed was received from the operational unit 206, the controller 210 preserves the image captured by the camera 220 in the storage device 208.
2. Next, the controller 210 records the time information and position information at this time in addition to the image in the storage device 208 as the event information (refer to FIG. 2).
3. Then, an upload indicator is displayed on the display unit 207.

In this example, as for "ON/OFF", although the items of a name of facility, comment and related information 1 are set "ON", items can be set in advance or can be set later on, as described above.

### E. Operation when calling, receiving a call and transmitting/receiving mail

1. When there is calling by the user and the portable communication device 200 receives call, or when there is the transmitting/receiving of mail, the other party of the telephone call or the sender/receiver of mail, the time information and position information at this time are stored in the storage device 208 as the event information.
2. Then, an upload indicator is displayed on the display unit 207.

Other than the above A to E, similarly the event information is recorded by making some action a trigger.

Further, operation when uploading the event information to the server 500 is explained.

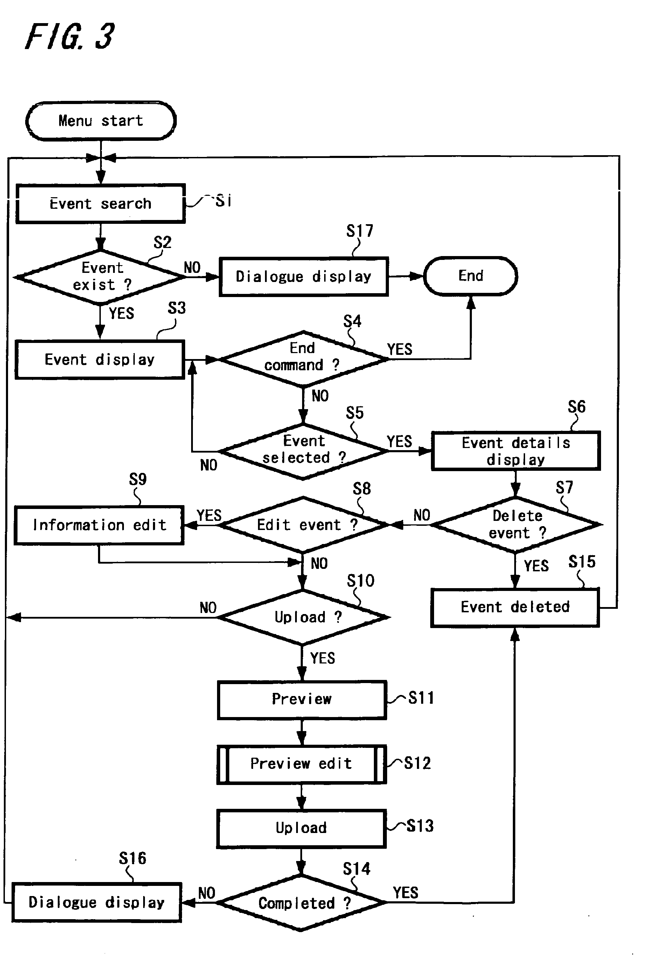

FIG. 3 is a flow chart showing the operation when uploading is performed. By the input operation of the user to the operational unit 206, an event menu is started and processing of uploading event information stored in the storage device 208 to the server is started.

Next, it is judged whether or not the event searched in the processing of step S1 exists (Step S2). When the searched event does not exist, the operation goes to step S17; and when it does exist, it goes to step S3.

When the event searched does not exist in the judgment processing of the step S2, the upload indicator is not displayed and the dialogue to indicate that there is no record of event is displayed in the display unit 207 (step S17) and the upload processing is ended.

When the event searched does exist in the judgment processing of the step S2, the event is displayed in the display unit 207 in the form of a list (step 3).

First, the controller 210 searches event information stored in the storage device 208 (step S1).

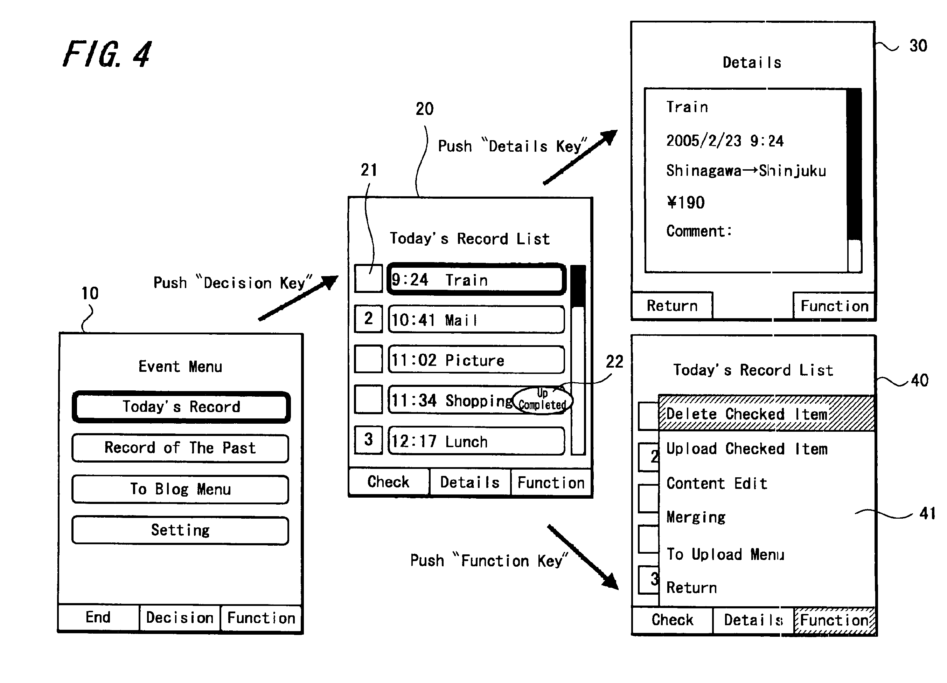

FIGS. 4 to 9 show screen transition examples in the case in which event information is uploaded. In these figures, predetermined keys in the operational unit 206 function as soft keys assigned to icons displayed at the lower part of screen. Hereupon, for example, when "Decision" is assigned to a specific key, the key is called "Decision key". For example, at first, a user operates the operational unit 206 and displays an event menu screen 10 as shown in FIG. 4. In this event menu screen 10, when "Decision key" is pushed in the state in which "Today's Record" is being selected, events related to the today's record is searched in the storage device 208 and the list of the today's record is displayed on an event list screen 20. A check box 21 displayed on the left side of the today's record list indicates a candidate to be deleted and the number shows the order of candidates that should be deleted. Also, an event in which a mark of "UP Completed" 22 was displayed shows that the upload to the server 500 was already performed. Although it is described later on, even if the upload was completed, the event whose event information was already deleted is not displayed in the today's record list.

As described above, when there is no event displayed in the event list screen 20, the upload is ended.

Subsequently, whether or not an end command is received from the operational unit 206 is judged (step S4), and when the end command is received, the upload processing is ended.

In the judgment processing of the step S4, when the end command is not received, an operation of the user is awaited, and whether or not a specific event has been selected is judged (step S5). In this judgment processing of the step S5, when the specific event has been selected, the operation goes to the step S6, and when the specific event has not been selected, the operation goes to the step S4.

In the judgment processing of the step S5, when a cursor is placed on the specific event and "Details key" has been pushed, the detailed contents relating to the specific event preserved in the storage device 108 are displayed on the display unit 207 (step S6). For example, in the event list screen 20, a cursor is placed on the event of "9:24 Train", and when "Details key" has been pushed, the detailed contents are displayed on an event detail screen 30.

Next, the user operates the operational unit 206 to judge whether or not event deletion operation has been performed (step S7), and when the event deletion operation been performed, the selected event information is deleted from the storage device 208 (step S15). Then, the operation returns to the event search processing of the step S1.

For example, in the event list screen 20 shown in FIG. 4, when "Function key" has been pushed, transition is made to an event list function display 40 and a pop-up menu 41 relating to the function is displayed. By selecting "Delete Checked Item" and by pushing the input key of the operational unit 206, the event whose check box 21 is marked with the number is deleted.

When the event deleting operation was not performed in the step S7, subsequently it is judged whether or not the event editing has been selected (step S8). Specifically, the choice of whether the selected event is edited is displayed on the display unit 207, and when "Edit" is selected the operation goes to step S9, when "Not Edit" is selected it goes to step S10.

In the judgment processing of the above step S8, when "Edit" has been selected, the event information in the storage device 208 is edited in accordance with the input of the user through the operational unit 206 (step S9). At this time, images or the like related to the event may be added to the server 500 through the mobile phone network 300.

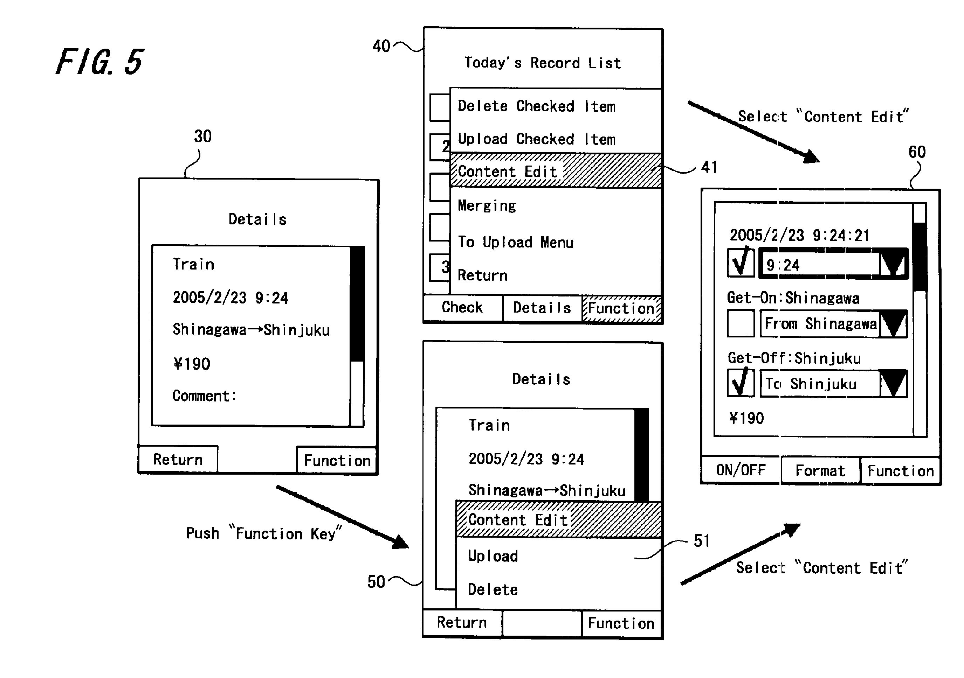

For example, in the event detail screen 30 shown in FIG. 5, when a "Function key" has been pushed, transition is made to an event detailed-function display 50 and a pop-up menu 51 is displayed. When a "Content Edit" on the pop-up menu is selected, transition is made to an event edit screen 60. When "Content Edit" in the pop-up menu 41 of the event list function display 40 is selected, also transition is made to an event edit screen 60. In the event edit screen 60, ON/OFF key is the one used to set ON/OFF shown in FIG. 2, and by pushing "ON/OFF key" in the state in which the item was selected, a check mark is changed.

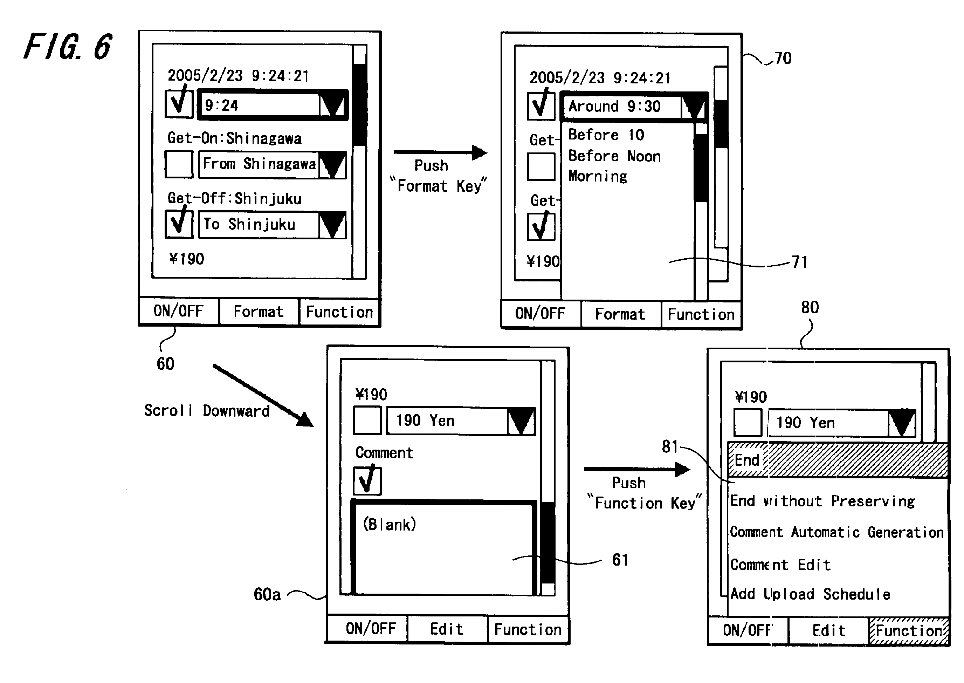

Further, as shown in FIG. 6, when the cursor is placed at "9:24" on the event edit screen 60 and "Format key" is pushed, transition is made to an event edit screen compo-box display 70 that includes a compo-box 71. In this compo-box 71, a plurality of expressions other than "9:24" are displayed, and when the cursor is placed on one of those, "Around 9:30" for example, and the input key is pushed, "around 9:30" instead of "9:24" is displayed on the event edit screen. On the other hand, when the screen display of the event edit screen 60 is scrolled downward, a comment column 61 appears and an event edit screen 60a in which an icon of "Format" was changed to an icon of "Edit" is displayed. At this time, when "Edit key" is pushed, the comment can be written into the comment column 61. Further, when "Function key" is pushed, transition is made to an event edit function display 80. When end is selected from a pop-up menu 81 of the event edit function display 80, the edited contents are preserved and an event edit mode ends.

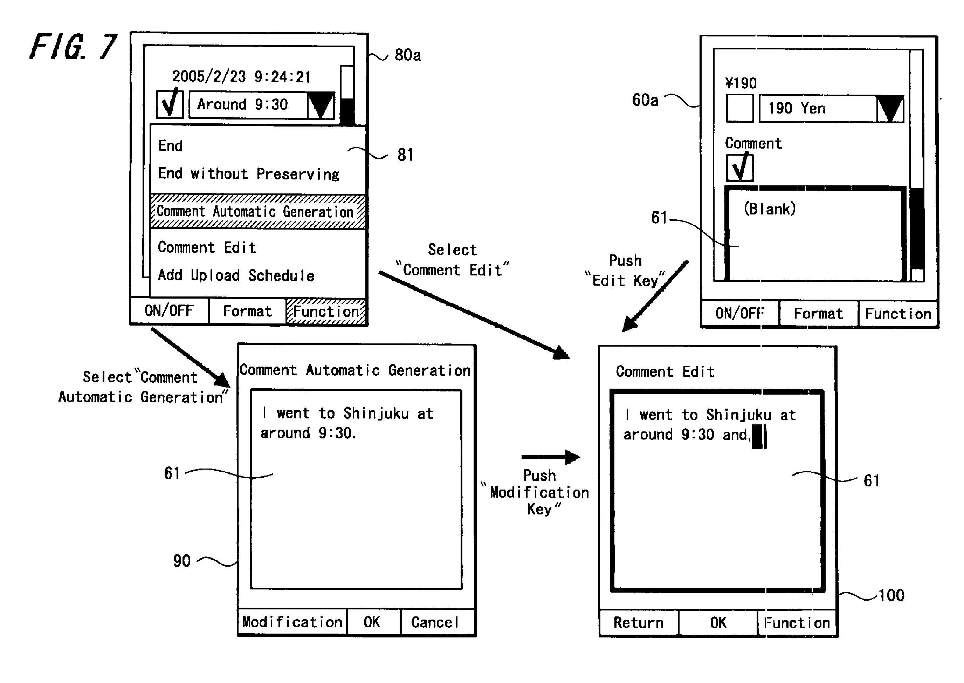

FIG. 7 is a view provided for explaining the comment preparation. In an event edit function display 80a shown in FIG. 7, when "Function key" is selected, the pop-up menu 81 is displayed. When "Comment Automatic Generation" in the pop-up menu 81 is selected, transition is made to a comment display screen 90, and the comment is automatically prepared in the comment column 61. When "Comment Edit" is selected in the pop-up menu 81 of the event edit function display 80 or "Edit key" is pushed in the event edit screen 60a, transition is made to a comment screen 100 and the manual editing of the comment can be carried out. Or, by selecting "Modification key" in the comment display screen 90, transition is made to the comment edit screen 100 and the comment editing can be carried out.

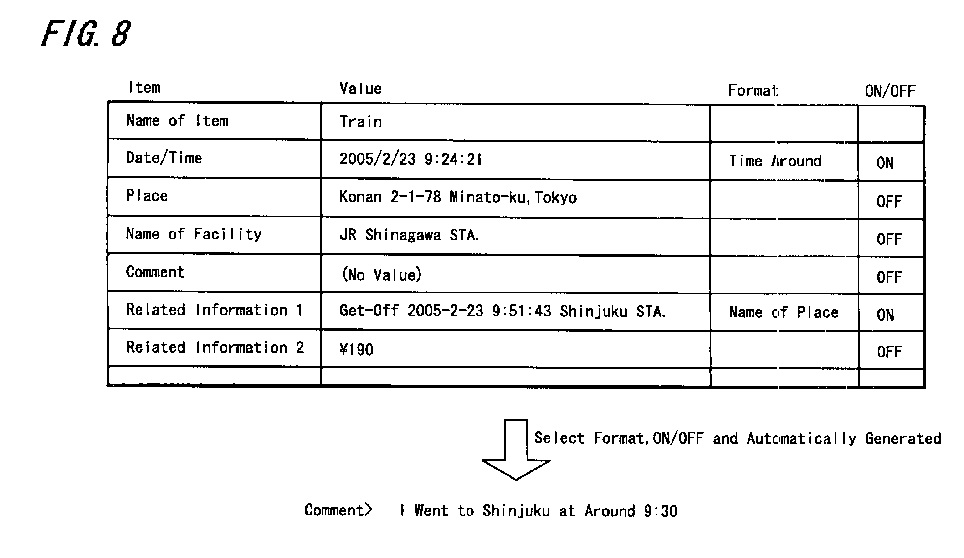

FIG. 8 is a view provided for the explanation of automatically preparing a comment. In FIG. 8, the items of "Date/Time" and "Related Information 1" are set "ON" respectively, and each format is a "Time Around" and "Name of Place". From this event's record, with respect to each item set "ON", information along the format is extracted to prepare the comment automatically. For example, in an example of FIG. 8, considering that it is an event in accordance with getting on and off the train, a comment "I went to Shinjuku at around 9:30" is automatically prepared.

In this way, by selecting the format and ON/OFF, the comment can be prepared automatically.

After having selected "Not edit" at the judgment processing of the step S8 or after the processing of the above-described step S9, the choice of whether or not it is uploaded is displayed in the display unit 207, and it is judged whether the upload is selected (step S10).

When "Not Upload" has been selected in the judgment processing of the above step S10, transition is made to the step S1. On the other hand, when "Upload" has been selected, preview display is performed (step S11), and the preview edit processing is carried out (step S12).

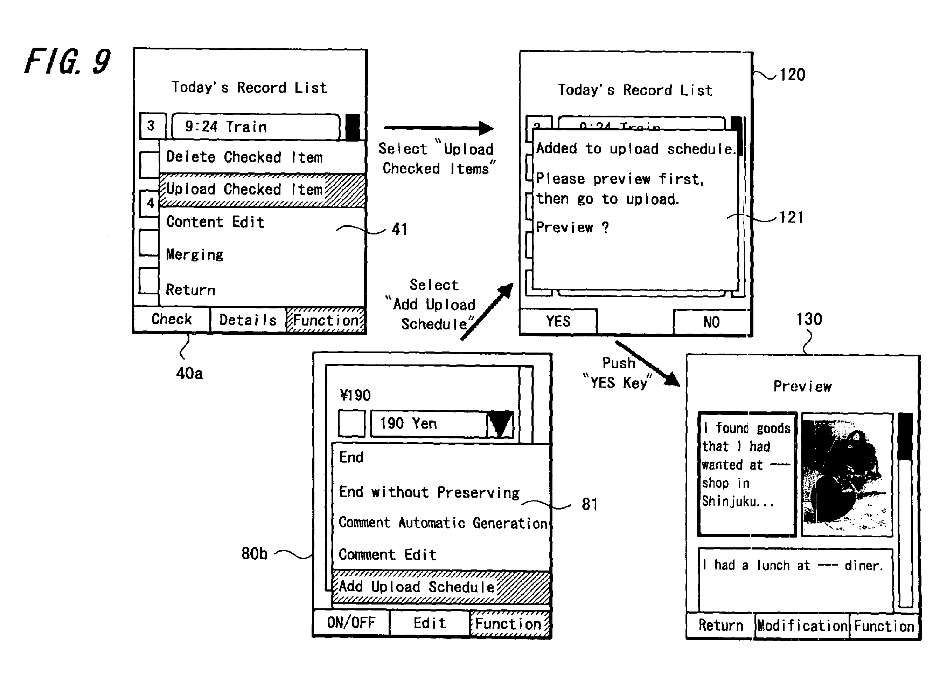

In this example, for example, when "Upload Checked Item" has been selected from the pop-up menu 41 in an event list function display 40a shown in FIG. 9, transition is made to an upload schedule confirmation display 120. In this example, since preview is first performed in order to upload the event, the dialogue 121 such as "Added to upload schedule; Please preview first then go to upload; Preview?" is displayed. In this state, when "YES key" of the upload schedule confirmation display 120 has been pushed, a preview screen 130 is displayed. This preview screen 130 is an example in which the comment is shown along with a picture of a bag, for example.

Or, by selecting "Add Upload Schedule" from the pop-up menu 81 of an event edit function display 80b, transition is made to the upload schedule confirmation display 120.

Explanation about preview edit processing in the above step S12 will be given.

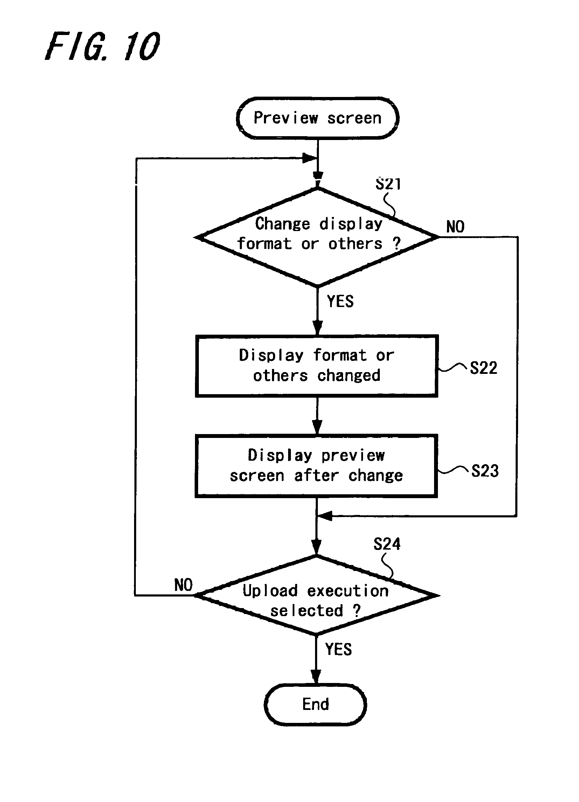

FIG. 10 is a flow chart showing the preview edit processing of the step S12. In this preview editing, for example, layout change, replacing the order of items displayed, deletion and insertion of items, background change and the like can be performed.

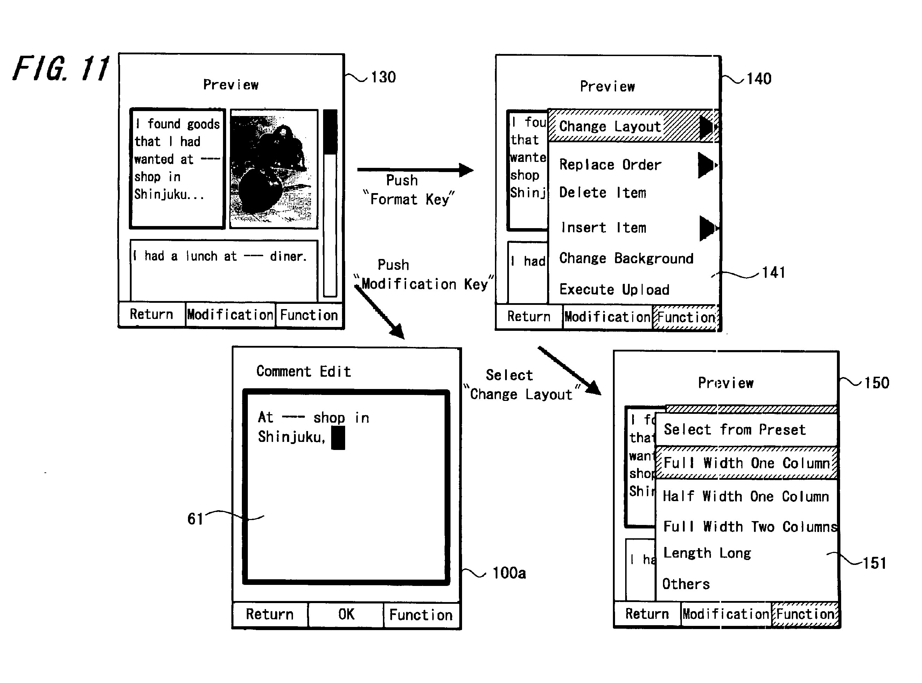

In FIG. 10, the controller 210 judges whether or not the user changes the display format or others when seeing the preview screen shown in FIG. 11 (step S21). When the display format or others are changed, the selected display format or the other changes are performed (step S22). After the changes have been finished, the preview screen after having changed is displayed (step S23).

For example, in the preview screen 130 shown in FIG. 11, when "Modification key" has been pushed, transition is made to a comment edit screen 100a, and the comment written in the comment column 61 can be modified. On the other hand, when "Function key" has been pushed, transition is made to a preview function display 140. When "Change Layout" is selected in a pop-up menu 141 of the preview function display 140, a pop-up menu 151 of the "Change Layout" is displayed, and transition is made to a layout change selection display 150. Then, by appropriately selecting the layout from the menu of the "Change Layout", the blog screen can be changed to a desired layout.

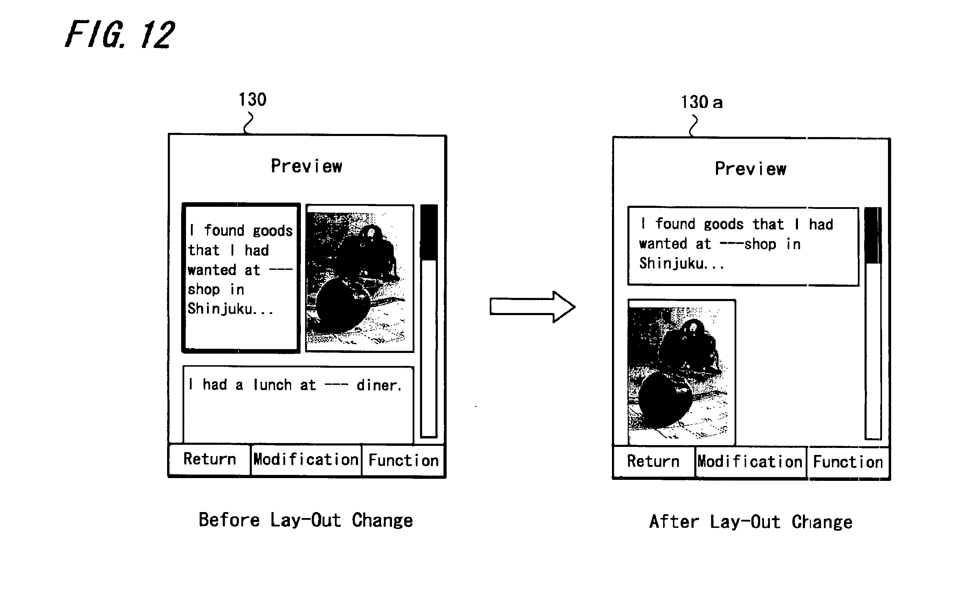

FIG. 12 shows an example of images before and after the layout change. In FIG. 12, a view on the left side is the preview screen 130 before the layout change. As for this, as an example, when the change to a full width one column display has been selected, transition is made to the preview screen 130a of a view on the right side, and the screen is changed to a full width one column display in which one column is individually used to show each of a comment, picture and the like.

In this example, preview editing can be performed at the time of uploading. With this, since the display format or attributes of event information such as layout change, order replacement, item deletion, item insertion and background change to be uploaded can be edited on the portable communication apparatus 200 side, the blog can be formed easily. Therefore, there is such an advantage that after uploading, access to the server 500 to obtain a blog edit mode and change the display format is not necessary.

Subsequently, after the processing of the step S23 or in the judgment processing of the step S21, when there was no change, the choice of whether or not upload is executed is displayed by the user pushing the function key (refer to the preview function display 140), and it is judged whether "Upload Execution" has been selected (step S24). Here, when the "Upload Execution" has been selected, the operation goes to step S13, and when the "Upload Execution" has not been selected, the operation goes to the step S21.

Explanation returns to the flow chart of FIG. 3 when the upload is performed. After the preview editing in the step S12, connecting to an upload URL (URL of the server 500) set and stored by the user in advance in the storage device 208 is performed, and the upload of the event information is executed (step S13).

Then, it is judged whether or not the upload processing described above has been completed (step S14). Here, when the upload has been completed, the fact that the upload has been completed is displayed on the display unit 207, and the event information whose upload has been completed is deleted. This is to use the resource of the storage device 208 efficiently. If there is a margin in the remaining capacity for record, the event deletion processing in the step S15 may be omitted and the operation may directly return to the step S1.

On the other hand, when the upload has not been completed, the fact that the upload has not been completed is displayed with dialogue and the operation moves to the step S1 (step S16).

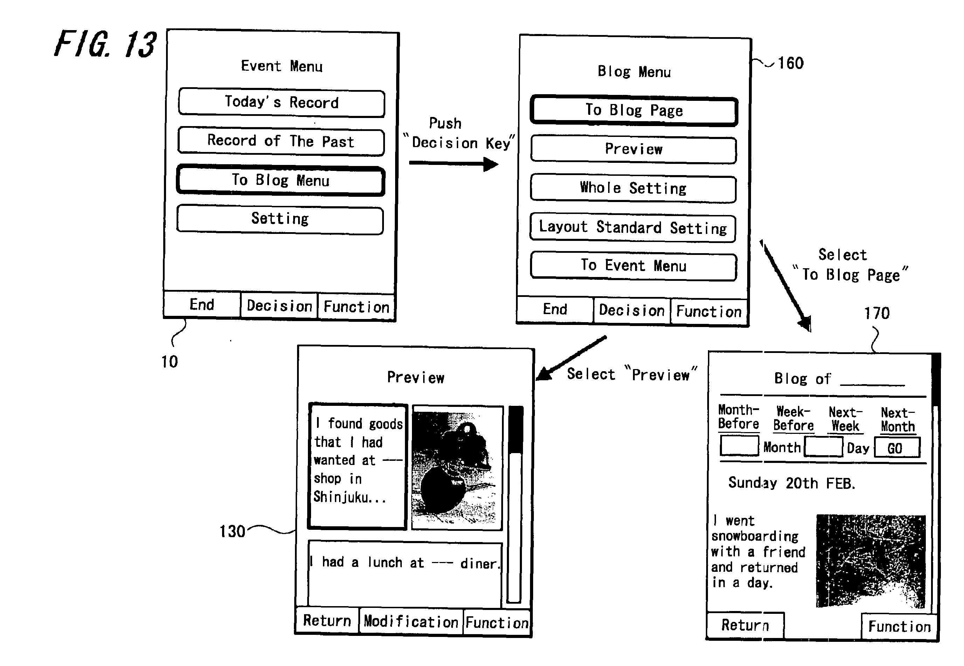

FIG. 13 shows an example of the operation to move from an event menu screen 10a to a preview screen 130 or a blog screen 170. In this example, in the event menu screen shown in FIG. 13,

when "Decision key" is pushed in the state in which "To Blog Menu" is being selected, a blog menu screen 160 is displayed. Then, in the blog menu of the blog menu screen 160, when the "Preview" has been selected, the preview screen 130 is displayed, and when the "To Blog Page" has been selected, the blog screen 170 is displayed.

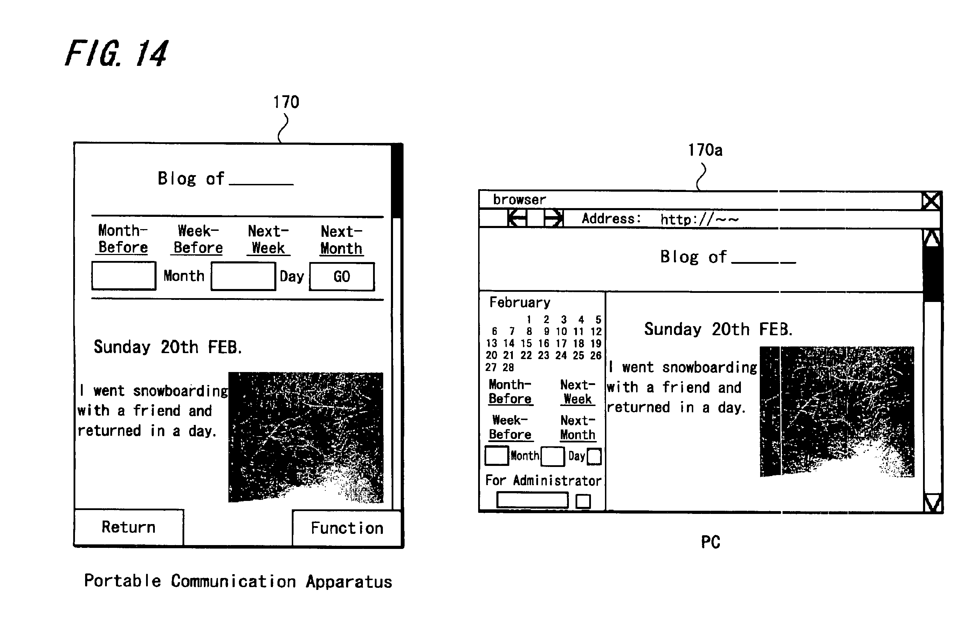

FIG. 14 shows examples of a blog display image. A blog screen 170 shown on the left in FIG. 14 is an example of the display image of a blog page in the portable communication apparatus 200. Also, a blog screen 170a shown on the right in FIG. 14 is an example of the image in a display device of comparatively large screen connected to a personal computer (PC). The user can also access to the server 500 from the PC to read the contents of blog formed by the portable communication apparatus 200 of this embodiment.

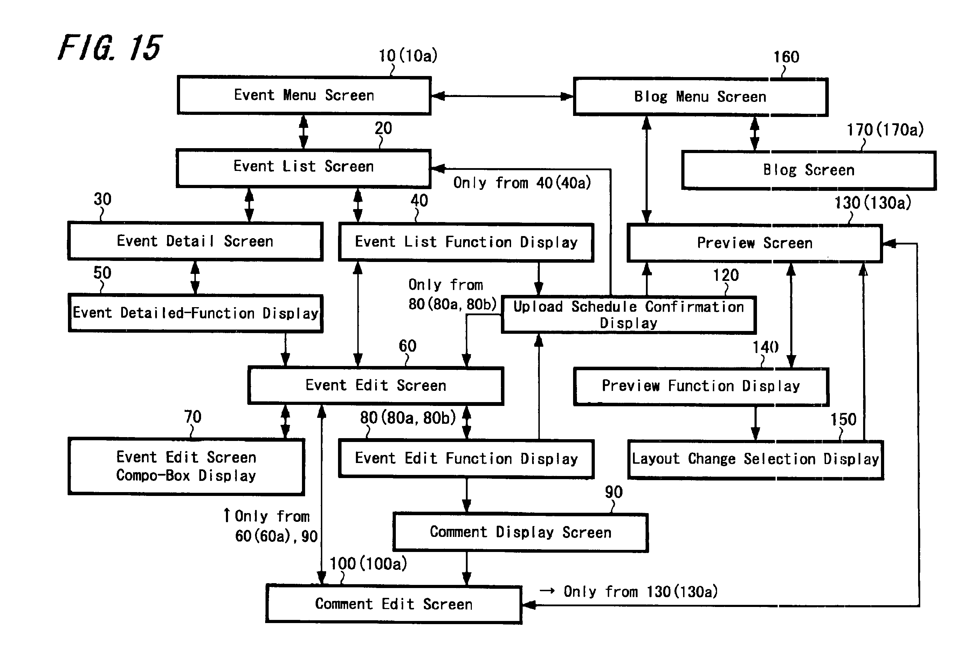

FIG. 15 shows the whole image in which the screen transitions of FIGS.4 through 9 and FIGS. 11 through 14 are summarized.

According to the configuration described above, by automatically recording the contents of user's action of a day with the form of the event information, the events or actions of the day can be recalled easily. Further, since the event information can be selected and edited easily on the portable communication side, a blog that is a journal website can be built easily.

Furthermore, in the above-described embodiments, other than the mobile phone unit, a PDA (personal Digital Assistance), game equipment with communication function and the like can also be applied as a portable communication apparatus, and the present invention is suitable to be applied to a portable communication apparatus which includes an additional function such as camera or electronic wallet function in addition to a communication function and GPS function.

It should be understood by those skilled in the art that various modifications, combinations, sub-combinations and alterations may occur depending on design requirements and other factors insofar as they are within the scope of the appended claims or the equivalents thereof.

## Claims

1. A portable communication apparatus (200) comprising:
communication means (202) for communicating through a wireless communication network with a server that provides a simplified website including information sent from the portable communication apparatus;
information acquisition means for acquiring a plurality of event information items, each of which includes information which is acquired when a predetermined function is executed and a date and time of this execution;
a memory (208) for storing said plurality of event information items in the form of an event list;
a display device (207) for displaying said event list;
an operational unit (206) for selecting desired event information from the event list displayed on said display device; and
control means (210) for controlling said communication means, said information acquisition means, said memory and said display device,
wherein said control means (210) control such that the desired event information selected by said operational unit is read from said memory (208) and is sent to said server by said communication means (202) as information to be displayed with a predetermined display format.

2. The portable communication apparatus (200) according to claim 1,
wherein said information acquisition means (240) include position information acquisition means (240) that acquire position information when the predetermined function of said portable communication apparatus is executed, and said event information includes the acquired position information.

3. The portable communication apparatus (200) according to claim 1 or 2,
wherein said desired event information is capable of being displayed on said display device before sent to said server.

4. The portable communication apparatus (200) according to claim 2,
wherein said position information acquisition means (240) is a GPS receiving unit.

5. The portable communication apparatus (200) according to one of the claims 1 to 4,
wherein based on said each event information said control means (210) control such that a comment to be sent to said server is automatically prepared.

6. The portable communication apparatus (200) according to claim 5,
wherein the acquired information included in said event information is formed of a plurality of items, and said control means automatically prepare said comment using items selected from said plurality of items in advance.

7. The portable communication apparatus (200) according to claim 5,
wherein said automatically prepared comment is capable of being edited using said operational unit.

8. The portable communication apparatus (200) according to one of the claims 1 to 7,
wherein said predetermined function is of sending and receiving electronic information by short-range communication between the portable communication apparatus and an outside reader/writer.

9. The portable communication apparatus (200) according to claim 8,
wherein said electronic information is electronic money information, electronic train ticket information or electronic ticket information.

10. The portable communication apparatus (200) according to one of the claims 1 to 9,
wherein said predetermined function is of sending and receiving electronic information through a wireless communication network between the portable communication apparatus and a specific server.

11. The portable communication apparatus (200) according to one of the claims 1 to 10,
wherein said predetermined function is camera function or mail communication function.
